# EUROPEAN PATENT SPECIFICATION

(11) **EP 4 138 505 B1**
(45) Date of publication and mention of the grant of the patent: **22.07.2026**
(21) Application number: 20934154.4
(22) Date of filing: 30.04.2020
(51) Int. Cl.: H04W 74/0833, H04B 7/185, H04W 56/00, H04W 74/0836

(54) **WIRELESS COMMUNICATION METHOD, TERMINAL DEVICE, AND NETWORK DEVICE**
DRAHTLOSKOMMUNIKATIONSVERFAHREN, ENDGERÄTEVORRICHTUNG UND NETZWERKVORRICHTUNG
PROCÉDÉ DE COMMUNICATION SANS FIL, DISPOSITIF TERMINAL ET DISPOSITIF RÉSEAU

(43) Date of publication of application: 22.02.2023
(73) Proprietor: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Taor, Simon Edward William
(86) International application number: PCT/CN2020/088410
(87) International publication number: WO 2021/217615

(56) References cited:
- WO-A1-2019/161044
- WO-A1-2020/065469
- WO-A1-2020/065469
- CN-A- 102 104 978
- CN-A- 110 098 892
- CN-B- 102 711 273
- OPPO: "Left issues on random access procedure in NTN", vol. RAN WG2, no. Chongqing, China; 20191014 - 20191018, 3 October 2019 (2019-10-03), XP051804212, Retrieved from the Internet <URL:https://ftp.3gpp.org/tsg_ran/WG2_RL2/TSGR2_107bis/Docs/R2-1913335.zip R2-1913335.doc> [retrieved on 20191003]
- ZTE CORPORATION ET AL: "TP on RACH capacity evaluation and procedures", vol. RAN WG2, no. Chongqing, China; 20191014 - 20191018, 18 October 2019 (2019-10-18), XP051797899, Retrieved from the Internet <URL:https://ftp.3gpp.org/tsg_ran/WG2_RL2/TSGR2_107bis/Docs/R2-1914069.zip R2-1914069_TP on RACH capacity evaluation and procedures.doc> [retrieved on 20191018]
- OPPO: "Discussion on RACH procedure for NTN", vol. RAN WG2, no. Reno, US; 20190513 - 20190517, 13 May 2019 (2019-05-13), XP051729085, Retrieved from the Internet <URL:http://www.3gpp.org/ftp/Meetings%5F3GPP%5FSYNC/RAN2/Docs/R2%2D1905581%2Ezip> [retrieved on 20190513]

## Description

### TECHNICAL FIELD

Embodiments of the present disclosure generally relate to the communication technical field, and more particularly, to a wireless communication method, a terminal device and a network device.

### BACKGROUND

The fifth-generation mobile communication technology (5-Generation New Radio, 5G NR) system defines deployment scenarios of a Non-Terrestrial Networks (NTN) system including satellite networks. With the wide-area coverage capability of satellites, the NTN system can achieve 5G NR service continuity. Due to the large coverage of satellites, for different terminal devices within the coverage of the same satellite, due to their different positions, the signal transmission delays between the terminal devices and the satellite may be quite different, which therefore puts higher requirements on the random access mechanism in the NTN system. Thus, tow to realize the random access in the NTN system is an urgent problem to be solved.

Related technologies are known from a non-patent disclosure titled "Left issues on random access procedure in NTN", 3GPP DRAFT, R2-1913335; a patent application publication no. WO2019/161044A1; a patent application publication no. WO2020/065469A1; and a non-patent disclosure titled "TP on RACH capacity evaluation and procedures", 3GPP DRAFT, R1-1914069.

### SUMMARY

The invention is defined by the appended set of claims.

### BRIEF DESCRIPTION OF THE DRAWINGS

FIG. 1 is a schematic diagram of a communication system architecture according to an embodiment of the present disclosure.
FIG. 2 is a schematic flowchart of a four-step random access according to an embodiment of the present disclosure.
FIG. 3 is a schematic flowchart of a wireless communication method according to an embodiment of the present disclosure.
FIG. 4 is a schematic diagram of a first RTT offset value group according to an embodiment of the present disclosure.
FIG. 5 is a schematic flowchart showing maintenance of a time window according to an embodiment of the present disclosure.
FIG. 6 is a schematic flowchart showing another maintenance of a time window according to an embodiment of the present disclosure.
FIG. 7 is a schematic flowchart of another wireless communication method according to an embodiment of the present disclosure.
FIG. 8 is a schematic flowchart of still another wireless communication method according to an embodiment of the present disclosure.
FIG. 9 is a schematic flowchart showing maintenance of a timer according to an embodiment of the present disclosure.
FIG. 10 is a schematic flowchart of still another wireless communication method according to an embodiment of the present disclosure.
FIG. 11 is a schematic block diagram of a terminal device according to an embodiment of the present disclosure.
FIG. 12 is a schematic block diagram of a network device according to an embodiment of the present disclosure.
FIG. 13 is a schematic block diagram of another terminal device according to an embodiment of the present disclosure.
FIG. 14 is a schematic block diagram of another network device according to an embodiment of the present disclosure.
FIG. 15 is a schematic block diagram of a communication device according to an embodiment of the present disclosure.
FIG. 16 is a schematic block diagram of a device according to an embodiment of the present disclosure.
FIG. 17 is a schematic block diagram of a communication system according to an embodiment of the present disclosure.

### DETAILED DESCRIPTION

Technical solutions according to embodiments of the present disclosure will be described below with reference to the drawings. Obviously, the described embodiments are some, but not all, embodiments of the present disclosure. All other embodiments obtained by those of ordinary skill in the art based on the embodiments in the present disclosure without creative work fall within the scope of protection of the present disclosure.

Embodiments of the present disclosure can be applied to various communication systems, such as, Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Universal Mobile Telecommunication System (UMTS), Wireless Local Area Networks (WLAN), Wireless Fidelity (WiFi), next-generation communication system or other communication systems, etc.

Generally speaking, traditional communication systems support a limited number of connections and are easy to implement. However, with the development of communication technologies, mobile communication systems will not only support traditional communications, but also support, for example, Device to Device (Device to Device, D2D) communications, Machine to Machine (M2M) communications, Machine Type Communication (MTC), and Vehicle to Vehicle (V2V) communications, etc. Embodiments of the present disclosure can be applied to these communications systems.

Optionally, the communication systems in embodiments of the present disclosure can be applied to a Carrier Aggregation (CA) scenario, can also be applied to a Dual Connectivity (DC) scenario, and can also be applied to a standalone (SA) network deployment scenario.

The spectrum which embodiments of the present disclosure can be applied in is not limited. For example, embodiments of the present disclosure may be applied to licensed spectrum or unlicensed spectrum.

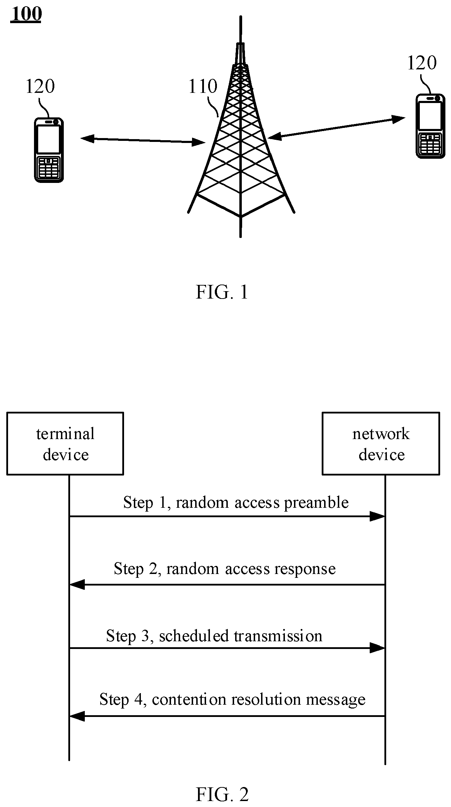

Exemplarily, a communication system 100 to which embodiments of the present disclosure may be applied is shown in FIG. 1. The communication system 100 may include a network device 110. The network device 110 may be a device that communicates with a terminal device 120 (or referred to as a communication terminal, or a terminal). The network device 110 may provide communication coverage for a particular geographic area, and may communicate with terminal devices within the coverage area.

FIG. 1 exemplarily shows one network device and two terminal devices. Optionally, the communication system 100 may include multiple network devices and the coverage of each network device may include other numbers of terminal devices, and embodiments of the present disclosure do not impose specific limitations on this.

According to some embodiments, the communication system 100 may further include other network entities such as a network controller or a mobility management entity, which are not limited in embodiments of the present disclosure.

It should be understood that, in the embodiments of the present disclosure, a device having a communication function in the network/system may be referred to as a communication device. Taking the communication system 100 shown in FIG. 1 as an example, the communication device may include a network device 110 and a terminal device 120 with a communication function, and the network device 110 and the terminal device 120 may be the specific devices described above, which will not be repeated here. The communication device may further include other devices in the communication system 100, such as other network entities like a network controller, or a mobility management entity, etc., which are not limited in the embodiments of the present disclosure.

It should be understood that the terms "system" and "network" are often used interchangeably herein. The term "and/or" herein is only an association relationship for describing associated objects, indicating that there can be three kinds of relationships. For example, A and/or B can mean three cases: A alone, B alone, and A and B together. In addition, the character "/" herein generally indicates that the associated objects before and after the character "/" are in an "or" relationship.

Embodiments of the present disclosure are described in combination with a terminal device and a network device. The terminal device may also be called User Equipment (UE), access terminal, user unit, user station, mobile station, mobile terminal, remote station, remote terminal, mobile device, user terminal, terminal, wireless communication device, user agent or user device, etc. The terminal device can be a station (ST) in a WLAN, a cellular phone, a cordless phone, a Session Initiation Protocol (SIP) phone, a Wireless Local Loop (WLL) station, or a Personal Digital Assistant (PDA) device, a handheld device with wireless communication capabilities, a computing device or other processing device connected to a wireless modem, a vehicle-mounted device, a wearable device, or a terminal device in a next-generation communication system, such as a terminal device in the NR network or a terminal device in a future evolved Public Land Mobile Network (PLMN) network.

By way of example and not limitation, in embodiments of the present disclosure, the terminal device may also be a wearable device. The wearable device can also be referred to as a wearable smart device, which is a general term for applying wearable technology to intelligently design everyday wear and develop wearable devices, such as glasses, gloves, watches, clothing and shoes. A wearable device is a portable device that is worn directly on the body or integrated into users' clothes or accessories. The wearable device is not only a hardware device, but also realize powerful functions through software support, data interaction, and cloud interaction. Generalized wearable smart devices include full-featured and large-sized devices which can realize complete or partial functions that do not depend on smart phones, such as smart watches or smart glasses, and devices that only focus on a certain type of application functions, and need to cooperate with other devices like smart phones, such as smart bracelets for sign monitoring, or smart jewelry.

The network device may be a device for communicating with a mobile device. The network device may be an Access Point (AP) in WLAN, a base station (BTS, Base Transceiver Station) in GSM or CDMA, or a base station (NB, NodeB) in WCDMA, an evolved base station in LTE (Evolutional Node B, eNB or eNodeB,), or a relay station or an access point, or a vehicle-mounted device, a wearable device, a network device or a base station (gNB) in an NR network, or a network device in a future evolved PLMN network.

In embodiments of the present disclosure, the network device provides services for a cell, and the terminal device communicates with the network device through transmission resources (for example, frequency domain resources, or spectrum resources) used by the cell. The cell may be a cell corresponding to the network device (for example, base station). The cell may belong to a macro base station or a base station corresponding to a small cell. The small cell here may include: a metro cell, a micro cell, a pico cell, a femto cell, etc. These small cells have the characteristics of small coverage and low transmit power, and are suitable for providing high-speed data transmission services.

The 5G NR system defines deployment scenarios for NTN systems including satellite networks. NTN generally uses satellite communication to provide communication services to terrestrial users. Compared with terrestrial cellular network communication, satellite communication has many unique advantages. First of all, satellite communication is not limited by the user's geographical area. For example, general terrestrial communication cannot cover areas such as oceans, mountains, deserts, etc. where communication equipment cannot be set up or communication coverage cannot be realized due to sparse population. For satellite communication, a single satellite can cover a large ground, and the satellite can orbit around the earth, and thus theoretically, every corner of the earth can be covered by satellite communications. Secondly, satellite communication has great social value. Satellite communications can be covered at low cost in remote mountainous areas and poor and backward countries or regions, so that people in these regions can enjoy advanced voice communications and mobile Internet technologies, which is conducive to narrowing the digital divide with developed regions and promoting development in these regions. Thirdly, the satellite communication distance is long, and the communication cost does not increase significantly when the communication distance increases. Finally, the satellite communication has high stability and is not limited by natural disasters.

Communication satellites are classified into Low-Earth Orbit (LEO) satellites, Medium-Earth Orbit (MEO) satellites, Geostationary Earth Orbit (GEO) satellites, and High Elliptical Orbit (HEO) satellites, and so on.

For example, the altitude range of LEO satellites is 500km~1500km, and the corresponding orbital period is about 1.5 hours~2 hours. The signal propagation delay of single-hop communication between users is generally less than 20ms. The maximum satellite visible time is 20 minutes. The signal propagation distance is short, the link loss is small, and the transmit power requirements for the user terminals are not high.

For another example, the orbital altitude of the GEO satellite is 35786km, and the rotation period around the earth is 24 hours. The signal propagation delay of single-hop communication between users is generally 250ms.

For the NTN system, in order to ensure the coverage of the satellite and improve the system capacity of the entire satellite communication system, the satellite uses multiple beams to cover the ground. A satellite can form dozens or even hundreds of beams to cover the ground. A satellite beam can cover a ground area of tens to hundreds of kilometers in diameter.

It should be noted that a random access procedure can usually be triggered by the following events:
(1) Establishment of a wireless connection during initial access. For example, if a terminal device needs to enter a Radio Resource Control (RRC) connected state (RRC_CONNECTED) from a RRC idle state (RRC_IDLE state), the terminal device can trigger initial access;
(2) RRC connection re-establishment procedure, so that the terminal device can reestablish the wireless connection after the wireless link fails;
(3) Handover. In this case, the terminal device is in the connected state, and the terminal device needs to establish uplink synchronization with a target cell;
(4) DL or UL data arrival during RRC_CONNECTED when UL synchronization status is "non-synchronized";
(5) UL data arrival during RRC_CONNECTED when there are no PUCCH (Physical Uplink Control Channel) resources for SR (Scheduling Request) available;
(6) SR failure;
(7) Request by RRC upon synchronous (re)configuration;
(8) Transition from RRC_INACTIVE by the terminal device;
(9) To establish time alignment at SCell addition;
(10) Request for Other System Information (OSI) by the terminal device; or
(11) The terminal device needs to perform beam failure recovery.

In the NR system, two kinds of random access modes may be supported: a contention-based random access mode and a non-contention-based random access mode. The contention-based four-step random access is briefly described below. As shown in FIG. 2, the four-step random access includes the following:

In step 1, the terminal device sends a random access preamble (that is, Msg 1) to the network device.

The random access preamble may also be referred to as a preamble, a random access preamble sequence, a preamble sequence, or the like.

For example, the terminal device may select Physical Random Access Channel (PRACH) resources. The PRACH resources may include time domain resources, frequency domain resources and code domain resources. The network device sends random access related parameters to the terminal device by broadcasting a System Information Block (SIB) 1. A Reference Signal Receiving Power (RSRP) threshold value (rsrp-ThresholdSSB) for Synchronization Signal Block (SSB) in a random access common configuration information element (RACH-ConfigCommon IE) is used for the terminal device to perform SSB selection. The terminal device compares the RSRP measurement result under each SSB with the rsrp-ThresholdSSB, and selects a SSB whose measurement value is higher than the configured threshold value to access. If there is no SSB that meets the configured threshold value, the terminal device randomly selects one from all SSBs for access. Each SSB corresponds to a set of random access preamble resources and random access occasion (RACH Occasion, RO) resources. The terminal device performs random selection from contention-based random access resources for the selected SSB, and sets the preamble index (PREAMBLE_INDEX) to be the selected random access preamble. The network device may estimate the transmission delay between itself and the terminal device according to the preamble and calibrate the uplink timing accordingly, and may roughly determine the resource size required by the terminal device to transmit Msg 3. In order to allow the network device to more accurately know the size of the Msg 3 to be transmitted and allocate appropriate uplink resources, the preambles are divided into a preamble group A and a preamble group B. If preamble group B exists in the random access resources, the terminal device can select the preamble group according to the size of Msg 3 and pathloss.

In step 2, the network device sends a Random Access Response (RAR, namely Msg 2) to the terminal device.

After the terminal device sends the preamble to the network device, it can start a random access response window (ra-ResponseWindow). Within the ra-ResponseWindow, according to a Random Access Radio Network Temporary Identifier (RA-RNTI), the terminal device detects corresponding Physical Downlink Control Channel (PDCCH). If the terminal device detects the PDCCH scrambled by the RA-RNTI, the terminal device can obtain a Physical Downlink Shared Channel (PDSCH) scheduled by the PDCCH. The PDSCH includes the RAR corresponding to the preamble.

The RA-RNTI is calculated according to the time-frequency position of the PRACH where the preamble is sent. Therefore, if multiple terminal devices send their preambles on the same RO, the corresponding RARs are multiplexed in the same RAR Media Access Control Protocol Data Unit (MAC PDU). If a terminal successfully receives the PDCCH scrambled by the RA-RNTI corresponding to the RO resource for sending the preamble, and the RAR contains a Random Access Preamble Identifier (RAPID) carried in a MAC sub-PDU (subPDU) that corresponds to the PREAMBLE_INDEX selected in Msg 1, the RAR is successfully received, and the terminal can perform decoding to obtain the Timing Advance Command (TAC), the uplink grant resource (UL Grant) and the Temporary Cell Radio Network Temporary Identity (TC- RNTI) to perform Msg 3 transmission.

If the PDCCH scrambled by RA-RNTI corresponding to the RO resource for sending the preamble is not received during the running of the ra-ResponseWindow, or if the PDCCH scrambled by RA-RNTI is received but the RAR does not contain the MAC subPDU corresponding to the PREAMBLE_INDEX, the two situations can be considered that the RAR reception fails. At this time, if the number of transmissions of preamble does not exceed the maximum number of transmissions (preambleTransMax) configured by the network, the terminal device needs to retransmit Msg 1. If the number of transmissions of preamble exceeds the maximum number of transmissions (preambleTransMax) configured by the network, the terminal device reports the random access problem to the upper layer.

In step 3, the terminal device sends Msg 3.

After receiving the RAR message, the terminal device determines whether the RAR is intended for the terminal device itself. For example, the terminal device can use the preamble index to check, and after determining that the RAR is intended for the terminal device itself, the terminal device can generate Msg 3 at the RRC layer, and send Msg 3 to the network device, which needs to carry identity information of the terminal device, etc.

The Msg 3 is mainly used to notify the network device of the trigger event of the random access. For different random access trigger events, the Msg 3 sent by the terminal device in step 3 may include different contents.

For example, for the initial access scenario, Msg 3 may include an RRC connection request message (RRC Setup Request) generated by the RRC layer. In addition, the Msg 3 may also carry, for example, a 5G Serving-Temporary Mobile Subscriber Identity (S-TMSI) of the terminal device or a random number.

For another example, for an RRC connection reestablishment scenario, Msg 3 may include an RRC connection reestablishment request message (RRC Reestabilshment Request) generated by the RRC layer. In addition, the Msg 3 may also carry, for example, a Cell Radio Network Temporary Identifier (C-RNTI) and the like.

For another example, for a handover scenario, Msg 3 may include an RRC Handover Confirm message (RRC Handover Confirm) generated by the RRC layer, which carries the C-RNTI of the terminal device. In addition, the Msg 3 may also carry information such as a Buffer Status Report (BSR). For other trigger events such as uplink/downlink data arrival scenarios, Msg 3 may include at least the C-RNTI of the terminal device.

In step 4, the network device sends a contention resolution message, that is, Msg 4, to the terminal device.

The network device sends the Msg 4 to the terminal device, and the terminal device correctly receives the Msg 4 to complete the contention resolution. For example, during the RRC connection establishment procedure, the Msg 4 may carry the RRC connection establishment message.

Since the terminal device in step 3 can carry its own unique identifier in Msg 3, in the contention resolution mechanism, the network device carries the unique identifier of the terminal device in Msg4 to designate the terminal device that wins the competition. Other terminal devices that do not win in the contention resolution will reinitiate random access.

It should be understood that, in some embodiments of the present disclosure, there may be two methods to resolve the contention or conflict:

Method 1: if the terminal device carries the C-RNTI in Msg 3, then Msg 4 can be scheduled with the PDCCH scrambled by the C-RNTI.

Method 2: if the terminal device does not carry the C-RNTI in the Msg 3 (such as initial access), the Msg 4 can be scheduled with the PDCCH scrambled by the TC-RNTI. In this case, the contention or conflict can be resolved by receiving the PDSCH for Msg 4 by the terminal device to obtain the conflict resolution ID. By matching the conflict resolution ID with the Common Control Channel (CCCH) Service Data Unit (SDU) in Msg 3 to determine whether the conflict is resolved.

A two-step random access procedure is being studied in the standardization process of NR Rel-16. Compared with the four-step random access procedure in the Rel-15 version, the two-step random access can reduce the delay and reduce the signaling overhead. The basic steps of two-step random access currently determined are:
1. The terminal sends MsgA to the network, and MsgA is used to transmit Msg1+Msg3 in the four-step random access;
2. The network sends MsgB to the terminal, and MsgB is used to transmit Msg2+Msg4 in the four-step random access. After the terminal sends MsgA, the terminal starts a receiving window for MsgB, and monitors and receives MsgB in the receiving window.

For the four-step random access procedure, after sending Msg1, the terminal device monitors the PDCCH scrambled by RA-RNTI within the random access response time window (ra-ResponseWindow) to receive the corresponding RAR. If the UE does not receive a random access response within this time window, it is considered that the random access has failed this time, and the terminal device will resend Msg1. When the number of times the terminal device sends Msg1 reaches a certain threshold, the terminal device indicates to the upper layer that there is a problem of random access. The random access response time window starts from the first PDCCH resource (occasion) after the terminal device sends Msg1. The window length of ra-ResponseWindow is configured by the network, and the maximum supported window length of ra-ResponseWindow is 10ms.

Similarly, after sending MsgA, the terminal device also starts a receiving time window for MsgB, and the terminal device monitors the MsgB from the network within this receiving time window. If the terminal device does not receive the MsgB within the receiving window, the terminal device considers that this random access fails.

Compared with the cellular network adopted in NR, the signal propagation delay between a terminal device and a satellite in NTN is greatly increased. In addition, due to the large coverage of satellites, for different terminal devices within the same satellite coverage, due to their different locations, the signal transmission delays between the terminal devices and the satellite may also be quite different. Therefore, if the random access mechanism of the current terrestrial NR system is directly used in the NTN system, there will be the following two problems:
1. The terminal device needs to wait at least one Round Trip Time (RTT) from sending Msg1 to receiving Msg2, that is, the transmission time of Msg1 plus the transmission time of Msg2. Because the coverage of a base station in the cellular network is small and the signal transmission time between a terminal device and the base station is short, in the NR system, the terminal device starts the ra-ResponseWindow at the first PDCCH occasion after sending Msg1. In NTN, the signal transmission time between the terminal device and the satellite is relatively large, and the RTT can be up to 541.46 ms, and the time interval from the terminal device sending Msg1 to the first PDCCH occasion is likely to be less than one RTT. If the terminal device in NTN still starts ra-ResponseWindow at the first PDCCH occasion after sending Msg1, there may be a problem that the terminal device starts ra-ResponseWindow too early due to the large Round Trip Time (RTT), and thus the terminal device monitors the RAR ineffectively, and this will undoubtedly increase the power consumption of the terminal.
2. In the traditional cellular network, the signal transmission time between a base station and different terminal devices within the coverage of the same base station differs slightly. For different terminal devices that use the same RACH occasion resource to send Msg1, the time when the Msg1 they send arrives at the base station is similar. Therefore, the current configuration of ra-ResponseWindow mainly considers the time required for the base station to process Msg1 and schedule Msg2. In NTN, the satellite coverage is large, and the positions of different terminal devices within the same satellite coverage are different, and the signal transmission time for the terminal device to communicate with the satellite may be quite different. Therefore, if the ra-ResponseWindow is not configured long enough, terminal devices far away from the satellite may be unable to receive RAR during the ra-ResponseWindow due to the large RTT. If the ra-ResponseWindow is configured too long, the time for the terminal devices to monitor RAR will increase, which may result in increased power consumption of the terminals.

Similar problems exist in the two-step random access applied in NTN.

In view of the above problems, embodiments of the present disclosure propose solutions for determining the length and start time of a time window for random access. In embodiments of the present disclosure, a first RTT offset value or a first RTT offset value group is introduced to determine the start time of the time window for random access, so as to accurately control the starting of the time window, thereby avoiding the influence of the transmission delay on the random access in the NTN system. In addition, a second RTT offset value is introduced to determine the start time of a four-step random access contention resolution timer, so as to accurately control the starting of the timer, thereby avoiding the influence of the transmission delay on the random access in the NTN system.

The technical solutions of the present disclosure are described in detail below through example embodiments.

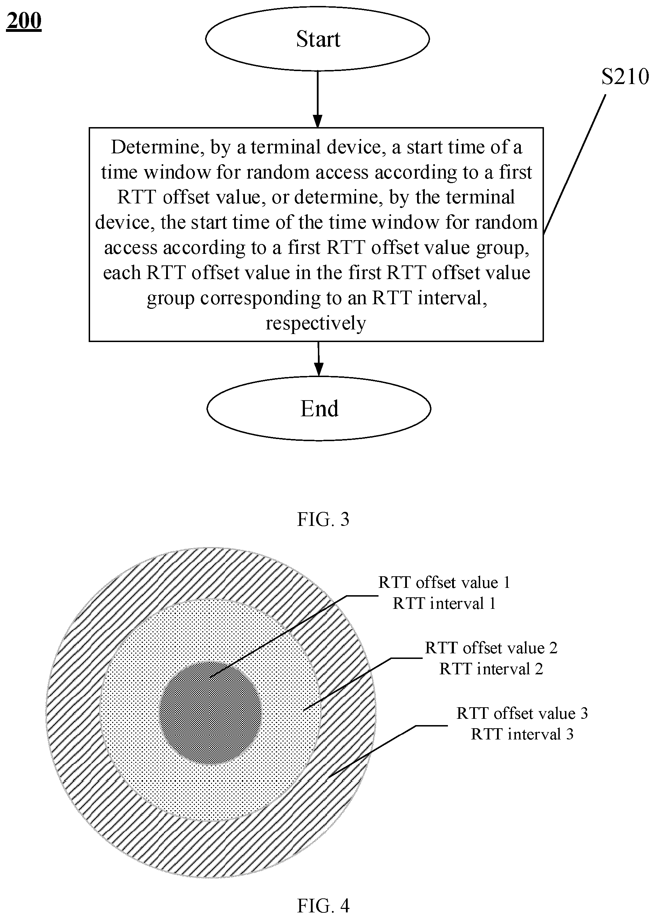

FIG. 3 is a schematic flowchart of a wireless communication method 200 according to an embodiment of the present disclosure. As shown in FIG. 3, the method 200 may include but is not limited to the following contents:
In S210, a terminal device determines a start time of a time window for random access according to a first RTT offset value, or the terminal device determines the start time of the time window for random access according to a first RTT offset value group. Each RTT offset value in the first RTT offset value group corresponds to an RTT interval, respectively.

It should be noted that the method 200 may be applied to an NTN system, that is, the network device may be a satellite in the NTN. In addition, the method 200 may also be applied to some other communication systems, which is not limited in the present disclosure.

In the embodiment of the present disclosure, the first RTT offset value or the first RTT offset value group is introduced to determine the start time of the time window for random access, so that the starting of the time window can be accurately controlled, and the influence of the transmission delay on the random access in the NTN system can be avoided.

Optionally, in some embodiments, the terminal device may maintain or control the start time of the time window based on configuration of the network device.

According to some embodiments, the first RTT offset value (RTT-offset) is determined according to a cell radius and/or a positioning accuracy of the terminal device. That is, the network device may determine the first RTT offset value according to the cell radius and/or the positioning accuracy of the terminal device.

According to some embodiments, the first RTT offset value group is determined according to the positioning accuracy of the terminal device. That is, the network device may determine the first RTT offset value group according to the positioning accuracy of the terminal device.

It should be noted that, in some embodiments of the present disclosure, the terminal device needs to have a positioning capability. For example, the terminal device can realize positioning based on a Global Positioning System (GPS), Beidou or other positioning systems.

Optionally, in some embodiments of the present disclosure, the time window is a random access response time window (ra-ResponseWindow) in the four-step random access, or the time window is a time window (MsgB window) for receipt of the second message (MsgB) in the two-step random access.

Optionally, in some embodiments, the terminal device receives configuration information sent by the network device. The configuration information is used to configure the window length of the time window, and to configure the first RTT offset value or the first RTT offset value group. That is, the first RTT offset value or the first RTT offset value group may be configured by the network device.

Optionally, the configuration information is carried in broadcast information, or the configuration information is carried in RRC signaling.

It should be noted that, if the configuration information is carried in broadcast information, the configuration information may be a cell common configuration.

According to some embodiments, if the configuration information is carried in RRC signaling, the configuration information is RRC reconfiguration information or RRC release information. The terminal device can use the configuration information after entering an idle state or an inactive state.

Optionally, in some other embodiments, the first RTT offset value or the first RTT offset value group may be information preconfigured in the terminal device, or the first RTT offset value or the first RTT offset value group is information agreed in a protocol.

Optionally, as Example 1, the configuration information configures the first RTT offset value. That is, the configuration information broadcast by the network device is used to configure the window length of the time window and the first RTT offset value.

In Example 1, the terminal device determines a start time offset value of the time window according to a signal transmission RTT estimate value between the terminal device and the network device and the first RTT offset value.

Specifically, in Example 1, the terminal device determines a difference between the RTT estimate value and the first RTT offset value as the start time offset value of the time window.

For example, in Example 1, based on the positioning capability, the terminal device estimates the distance d between the terminal device and the network device (satellite) according to the position of the terminal device, and then determines the signal transmission RTT estimate value for the terminal device to communicate with the satellite as: 2* d/v, where v is the signal transmission rate. Next, the terminal device determines the start time offset value of the time window as: the start time offset value of the time window = the RTT estimate value - the first RTT offset value.

Optionally, as Example 2, the configuration information configures the first RTT offset value group. That is, the configuration information broadcast by the network device is used to configure the window length of the time window and the first RTT offset value group.

In Example 2, the terminal device determines a target RTT offset value according to a signal transmission RTT estimate value between the terminal device and the network device. The target RTT offset value is an RTT offset value in the first RTT offset value group corresponding to an RTT interval where the RTT estimate value is located. The terminal device determines the start time offset value of the time window according to the RTT estimate value and the target RTT offset value.

Specifically, in Example 2, the terminal device determines a difference between the RTT estimate value and the target RTT offset value as the start time offset value of the time window.

For example, as shown in FIG. 4, the first RTT offset value group includes three RTT offset values, denoted as RTT offset value 1, RTT offset value 2 and RTT offset value 3, respectively. Among them, RTT offset value 1 corresponds to RTT interval 1. If the RTT estimate value < threshold RTT_th1, then the RTT estimate value belongs to RTT interval 1. RTT offset value 2 corresponds to RTT interval 2. If threshold RTT_th1 ≤ RTT estimate value ≤ threshold RTT_th2, the RTT estimate value belongs to RTT interval 2. RTT offset value 3 corresponds to RTT interval 3. If the RTT estimate value>threshold RTT_th2, the RTT estimate value belongs to RTT interval 3.

For example, in Example 2, based on the positioning capability, the terminal device estimates the distance d between the terminal device and the network device (satellite) according to the position of the terminal device, and then determines the signal transmission RTT estimate value for of its communication with the satellite as: the signal transmission RTT estimate value = 2* d/v, where v is the signal transmission rate. Next, the terminal device determines that the RTT estimate value belongs to the RTT interval i according to the RTT estimate value, then determines the target RTT offset value based on the RTT interval i, and finally, the terminal device determines the start time offset value of the time window as: the start time offset value of the time window = RTT estimate value - target RTT offset value.

Optionally, in some embodiments, when the time window is a random access response time window in four-step random access, that is, the time window is a random access response time window (ra-ResponseWindow), the terminal device starts the time window at the first PDCCH resource location (PDCCH occasion) after the start time offset value of the time window after sending of the first message (Msg1) in the four-step random access, and monitors the random access response within the time window. The window length of the time window adopts a value configured by the network device. Accordingly, the network device sends a random access response during the time window.

Optionally, in some other embodiments, when the time window is a time window for receipt of the second message (MsgB) in the two-step random access, that is, the time window is the MsgB receiving time window (MsgB window), the terminal device starts the time window at the first PDCCH resource position after the start time offset value of the time window after sending of the first message (MsgA) of the two-step random access, and monitors the second message (MsgB) in the two-step random access within the time window. The window length of the time window adopts a value configured by the network device. Correspondingly, the network device sends the second message (MsgB) in the two-step random access during the time window.

It should be noted that, the start time offset value of the time window can be obtained through the above Example 1 or Example 2.

The wireless communication method 200 in the present disclosure will be described in detail below through Embodiment 1 and Embodiment 2, respectively. It should be noted that Embodiment 1 and Embodiment 2 only take the time window being the random access response time window (ra-ResponseWindow) as an example for description, and these embodiments can also apply to the MsgB receiving time window (MsgB window), and for brevity, repeated descriptions are omitted.

### Embodiment 1

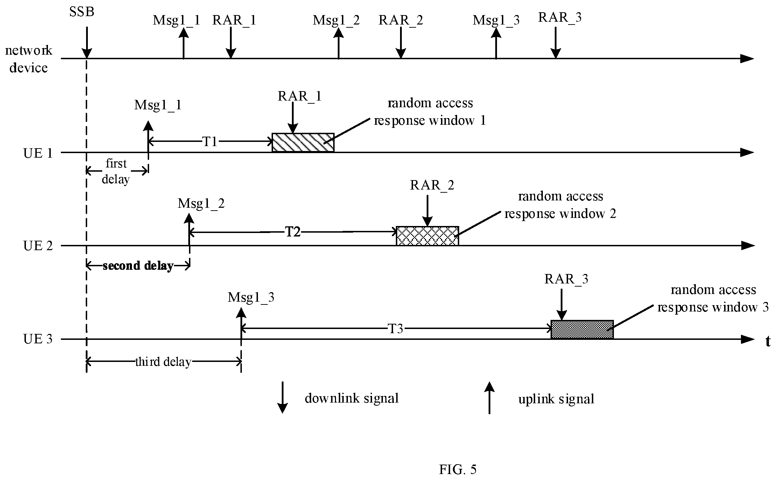

A satellite broadcasts configuration information. The configuration information is used to configure the window length of the random access response time window and the first RTT offset value. The first RTT offset value is used to determine the start time of the random access response time window. UE1, UE2 and UE3 are synchronized based on the Synchronization Signal Block (SSB), as shown in FIG. 5. For UE1, UE1 estimates the distance d₁ between UE1 and the satellite according to the position of UE1 based on its positioning capability. Then, UE1 determines the signal transmission RTT estimate value 1 for its communication with the satellite as: 2*d₁/v, where v is the signal transmission rate. Then, UE1 determines the start time offset value T1 of the random access response time window 1 as: T1=RTT estimate value 1 - the first RTT offset value. For UE2, UE2 estimates the distance d₂ between UE2 and the satellite according to the position of UE2 itself based on its positioning capability. Then, UE2 determines the signal transmission RTT estimate value 2 for its communication with the satellite as: 2*d₂/v, where v is the signal transmission rate. Then, UE2 determines the start time offset value T2 of the random access response time window 2 as: T2 = RTT estimate value 2 - the first RTT offset value. For UE3, UE3 estimates the distance d₃ between UE3 and the satellite according to the position of UE3 itself based on its positioning capability. Then, UE3 determines the signal transmission RTT estimate value 3 for its communication with the satellite as: 2*d₃/v, where v is the signal transmission rate. Then, UE3 determines the start time offset value T3 of random access response time window 3 as: T3=RTT estimate value 3 - the first RTT offset value.

In addition, in Embodiment 1, as shown in FIG. 5, UE1 sends Msg1_1 after a first delay following the synchronization. UE1 starts the random access response time window 1 at the first PDCCH occasion after T1 subsequent to Msg1_1, and monitors the random access response (RAR_1) during the random access response time window 1. UE2 sends Msg1_2 after a second delay following the synchronization. UE2 starts the random access response time window 2 at the first PDCCH occasion after T2 subsequent to Msg1_2, and monitors the random access response (RAR_2) during the random access response time window 2. UE3 sends Msg1_3 after a third delay following the synchronization. UE3 starts the random access response time window 3 at the first PDCCH occasion after T3 subsequent to Msg1_3, and monitors the random access response (RAR_3) during the random access response time window 3.

Therefore, in Embodiment 1, since there is a certain error in UE positioning, the RTT estimate value calculated based on the positioning may deviate from the real value. If the calculated RTT estimate value is larger than the real value, under such condition, the UE uses the RTT estimate value as the start time offset value of the random access response time window, and it is possible that the UE may miss the reception of the RAR when the base station sends the RAR immediately after receiving the Msg1. The satellite configures an RTT-offset value (the first RTT offset value) according to the cell radius and the UE positioning accuracy, which can to a certain extent solve the problem that the UE misses RAR reception due to the positioning accuracy.

### Embodiment 2

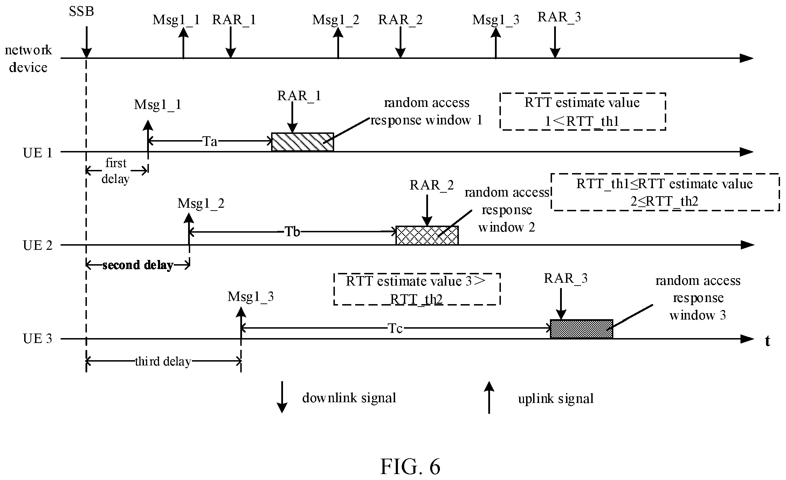

A satellite broadcasts configuration information. The configuration information is used to configure the window length of the random access response time window and the first RTT offset value group. The first RTT offset value group is used to determine the start time of the random access response time window. The first RTT offset value group includes three RTT offset values, which are denoted as RTT offset value 1, RTT offset value 2 and RTT offset value 3, respectively. Among them, RTT offset value 1 corresponds to RTT interval 1. If RTT estimate value < threshold RTT_th1, then the RTT estimate value belongs to RTT interval 1. RTT offset value 2 corresponds to RTT interval 2. If threshold RTT_th1 ≤ the RTT estimate value ≤ threshold RTT_th2, the RTT estimate value belongs to RTT interval 2. RTT offset value 3 corresponds to RTT interval 3. If the RTT estimate value > threshold RTT_th2, the RTT estimate value belongs to RTT interval 3. UE1, UE2, and UE3 are synchronized based on SSB. As shown in FIG. 6, for UE1, UE1 estimates the distance d₁ between UE1 and the satellite according to its position based on its positioning capability. Then, UE1 determines the signal transmission RTT estimate value 1 for its communication with the satellite as: 2*d₁/v, where v is the signal transmission rate. Then, UE1 determines that the RTT estimate value 1 belongs to RTT interval 1 according to the RTT estimate value 1, and then determines the target RTT offset value 1 based on RTT interval 1. Finally, UE1 determines the start time offset value Ta of the random access response window 1 as: Ta=RTT estimate value 1 - target RTT offset value 1. For UE2, UE2 estimates the distance d₂ between UE2 and the satellite according to the position of UE2 itself based on its positioning capability. Then, UE2 determines the signal transmission RTT estimate value 2 for its communication with the satellite as: 2*d₂/v, where v is the signal transmission rate. Then, UE2 determines that the RTT estimate value 2 belongs to RTT interval 2 according to RTT estimate value 2, and then determines the target RTT offset value 2 based on RTT interval 2. Finally, UE2 determines the start time offset value Tb of the random access response time window 2 as: Tb= RTT estimate value 2 - target RTT offset value 2. For UE3, UE3 estimates the distance d₃ between UE3 and the satellite according to the position of UE3 itself based on its positioning capability. Then, UE3 determines the signal transmission RTT estimate value 3 for its communication with the satellite as: 2*d₃/v, where v is the signal transmission rate. Then, UE3 determines that the RTT estimate value 3 belongs to RTT interval 3 according to RTT estimate value 3, and then determines the target RTT offset value 3 based on RTT interval 3. Finally, UE3 determines the start time offset value Tc of the random access response time window 3 as: Tc= RTT estimate value 3 - target RTT offset value 3.

In addition, in Embodiment 2, as shown in FIG. 6, UE1 sends Msg1_1 after a first delay following the synchronization. UE1 starts the random access response time window 1 at the first PDCCH occasion after Ta subsequent to Msg1_1, and monitors the random access response (RAR_1) during the random access response time window 1. UE2 sends Msg1_2 after a second delay following the synchronization. UE2 starts the random access response time window 2 at the first PDCCH occasion after Tb subsequent to Msg1_2, and monitors the random access response (RAR_2) during the random access response time window 2. UE3 sends Msg1_3 after a third delay following the synchronization. UE3 starts the random access response time window 3 at the first PDCCH occasion after Tc subsequent to Msg1_3, and monitors the random access response (RAR_3) during the random access response time window 3.

Therefore, in Embodiment 2, a certain error in UE positioning may be related to the positioning distance. By introducing different RTT offset values in different RTT intervals, the network can more accurately control the time when the UE starts the RAR window.

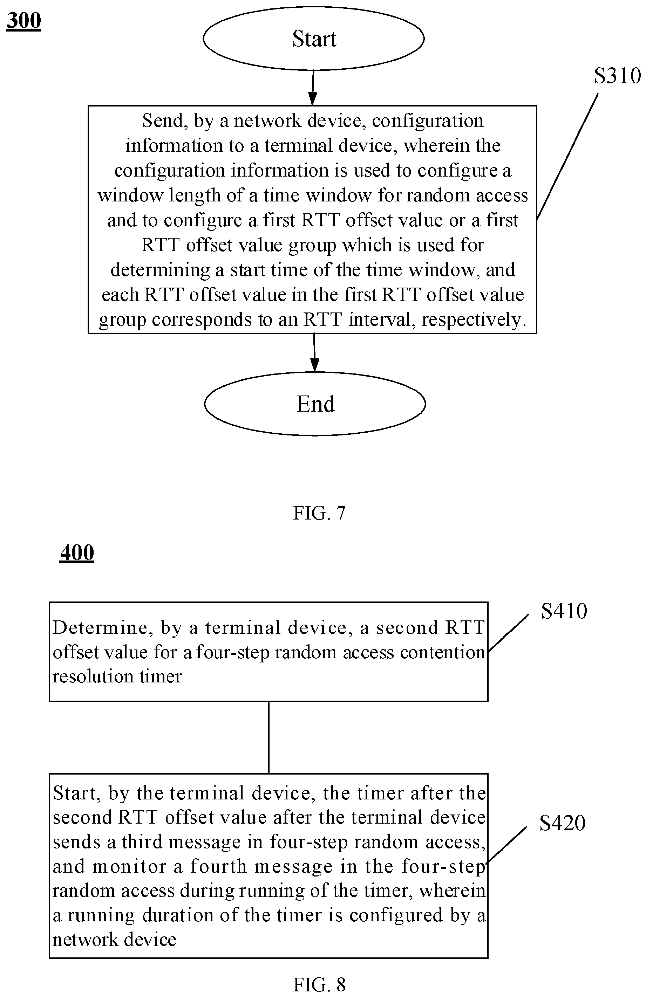

The wireless communication method 200 according to the embodiments of the present disclosure is described in detail from the perspective of a terminal device. The following will describe the corresponding solutions from the perspective of a network device with reference to FIG. 7. It should be understood that the description regarding the terminal device side corresponds to the description regarding the network device sides, and similar descriptions can be found in the description about the above embodiments, and repeated description will be omitted here.

FIG. 7 is a schematic flowchart of a wireless communication method 300 according to an embodiment of the present disclosure. As shown in FIG. 7, the method 300 may include but is not limited to the following contents:
In S310, a network device sends configuration information to a terminal device. The configuration information is used to configure a window length of a time window for random access and to configure a first RTT offset value or a first RTT offset value group which is used for determining a start time of the time window. Each RTT offset value in the first RTT offset value group corresponds to an RTT interval, respectively.

It should be noted that the method 300 can be applied to an NTN system, that is, the network device can be a satellite in the NTN. In addition, the method 300 can also be applied to some other communication systems, which is not limited in the present disclosure.

In the embodiments of the present disclosure, the network device configures the first RTT offset value or the first RTT offset value group to determine the start time of the time window for random access, so that the terminal device can accurately control the starting of the time window, and the influence of transmission delay on random access in NTN system can be avoided.

Optionally, in some embodiments of the present disclosure, the time window is a random access response time window in the four-step random access, or the time window is a time window for receipt of the second message (MsgB) in the two-step random access.

According to some embodiments, the configuration information is carried in broadcast information, or the configuration information is carried in RRC signaling.

If the configuration information is carried in RRC signaling, the configuration information is RRC reconfiguration information or RRC release information.

According to some embodiments, the first RTT offset value is determined according to a cell radius and/or a positioning accuracy of the terminal device.

According to some embodiments, the first RTT offset value group is determined according to the positioning accuracy of the terminal device.

Optionally, in some embodiments, when the configuration information configures the first RTT offset value, the network device determines a start time offset value of the time window according to a signal transmission RTT estimate value between the network device and the terminal device and the first RTT offset value.

Specifically, the network device determines the difference between the RTT estimate value and the first RTT offset value as the start time offset value of the time window.

Optionally, in some other embodiments, when the configuration information configures the first RTT offset value group, the network device determines a target RTT offset value according to a signal transmission RTT estimate value between the network device and the terminal device, wherein the target RTT offset value is an RTT offset value in the first RTT offset value group corresponding to an RTT interval where the RTT estimate value is located; and
the network device determines a start time offset value of the time window according to the RTT estimate value and the target RTT offset value.

Specifically, the network device determines the difference between the RTT estimate value and the target RTT offset value as the start time offset value of the time window.

Optionally, in some embodiments of the present disclosure, when the time window is a random access response time window in four-step random access, the network device sends a random access response during the time window.

Optionally, in some embodiments of the present disclosure, when the time window is a time window for receipt of the second message (MsgB) in the two-step random access, the network device sends the second message (MsgB) in the two-step random access during the time window.

Therefore, in the embodiments of the present disclosure, the network device configures the first RTT offset value or the first RTT offset value group to determine the start time of the time window for random access, so that the terminal device can accurately control starting of the time window, and the influence of transmission delay on random access in the NTN system can be avoided.

FIG. 8 is a schematic flowchart of a wireless communication method 400 according to an embodiment of the present disclosure. As shown in FIG. 8, the method 400 may include but is not limited to the following contents:

In S410, a terminal device determines a second RTT offset value for a four-step random access contention resolution timer.

In S420, the terminal device starts the timer after the second RTT offset value after the terminal device sends a third message in four-step random access, and monitors a fourth message in the four-step random access during running of the timer. A running duration of the timer is configured by a network device.

It should be noted that the method 400 can be applied to the NTN system, that is, the network device can be a satellite in the NTN. In addition, the method 400 can also be applied to some other communication systems, which is not limited in the present disclosure.

Optionally, in some embodiments, the terminal device determines the second RTT offset value according to the first RTT offset value, or the terminal device determines the second RTT offset value according to the first RTT offset value group value. Each RTT offset value in the first RTT offset value group corresponds to an RTT interval, respectively.

Optionally, in some embodiments of the present disclosure, the first RTT offset value or the first RTT offset value group may be configured by a network device, or may be preconfigured or agreed in a protocol.

According to some embodiments, the terminal device receives configuration information sent by the network device. The configuration information is used to configure the duration of the timer and to configure the first RTT offset value or the first RTT offset value group. That is, the terminal device can maintain or control the timer based on the configuration information.

According to some embodiments, the configuration information is carried in broadcast information, or the configuration information is carried in RRC signaling.

It should be noted that, if the configuration information is carried in broadcast information, the configuration information may be a cell common configuration.

According to some embodiments, if the configuration information is carried in RRC signaling, the configuration information is RRC reconfiguration information or RRC release information. The terminal device can use the configuration information after entering an idle state or an inactive state.

According to some embodiments, the first RTT offset value (RTT-offset) is determined according to a cell radius and/or a positioning accuracy of the terminal device. That is, the network device may determine the first RTT offset value according to the cell radius and/or the positioning accuracy of the terminal device.

According to some embodiments, the first RTT offset value group is determined according to the positioning accuracy of the terminal device. That is, the network device may determine the first RTT offset value group according to the positioning accuracy of the terminal device.

It should be noted that, in some embodiments of the present disclosure, the terminal device needs to have a positioning capability. For example, the terminal device can realize positioning based on positioning systems such as GPS, or Beidou.

Optionally, in some embodiments, the content configured in the configuration information may also be pre-configured in the terminal device, or the content configured in the configuration information is agreed in a protocol, which is not limited in the present disclosure.

Optionally, as example a, the configuration information configures the first RTT offset value, that is, the configuration information broadcast by the network device is used to configure the duration of the timer and the first RTT offset value.

In example a, the terminal device determines the second RTT offset value according to the signal transmission RTT estimate value between the terminal device and the network device and the first RTT offset value.

Specifically, in example a, the terminal device determines a difference between the RTT estimate value and the first RTT offset value as the second RTT offset value.

For example, in example a, the terminal device estimates the distance d between the terminal device and the network device (satellite) according to the position of the terminal device based on the positioning capability, and then determines the signal transmission RTT for its communication with the satellite as: 2* d/v, where v is the signal transmission rate. Next, the terminal device determines that the second RTT offset value = RTT estimate value - the first RTT offset value.

Optionally, as example b, the configuration information configures the first RTT offset value group, that is, the configuration information broadcast by the network device is used to configure the duration of the timer and the first RTT offset value group.

In example b, the terminal device determines a target RTT offset value according to a signal transmission RTT estimate value between the terminal device and the network device. The target RTT offset value is an RTT offset value in the first RTT offset value group corresponding to an RTT interval where the RTT estimate value is located. And, the terminal device determines the second RTT offset value according to the RTT estimate value and the target RTT offset value.

Specifically, in example b, the terminal device determines a difference between the RTT estimate value and the target RTT offset value as the second RTT offset value.

For example, as shown in FIG. 4, the first RTT offset value group includes three RTT offset values, denoted as RTT offset value 1, RTT offset value 2 and RTT offset value 3, respectively. Among them, RTT offset value 1 corresponds to RTT interval 1. If RTT estimate value < threshold RTT_th1, then RTT estimate value belongs to RTT interval 1. RTT offset value 2 corresponds to RTT interval 2. If threshold RTT_th1 ≤ RTT estimate value ≤ threshold RTT_th2, the RTT estimate value belongs to RTT interval 2. RTT offset value 3 corresponds to RTT interval 3. If the RTT estimate value>threshold RTT_th2, the RTT estimate value belongs to RTT interval 3.

For example, in example b, the terminal device estimates the distance d between the terminal device and the network device (satellite) according to the position of the terminal device based on the positioning capability, and then determines the signal transmission RTT estimate value for its communication with the satellite as: 2* d/v, where v is the signal transmission rate. Next, the terminal device determines that the RTT estimate value belongs to the RTT interval i according to the RTT estimate value. Then, the terminal device determines the target RTT offset value based on the RTT interval i. Finally, the terminal device determines that the second RTT offset value=RTT estimate value-target RTT offset value.

That is to say, in the embodiments of the present disclosure, the first RTT offset value or the first RTT offset value group is introduced to determine the start time of the four-step random access contention resolution timer, so that the starting of the timer can be accurately controlled, and the influence of transmission delay on random access in NTN system can be avoided.

Optionally, in some other embodiments, the terminal device determines a sum of an initial Timing Advance (TA) compensation value and a TA adjustment value as the second RTT offset value. The initial TA compensation value is a TA compensation value used by the terminal device during sending of the first message (Msg1) in the four-step random access. The TA adjustment value is an adjustment value for TA which is configured by the network device in a second message (Msg2) in the four-step random access.

According to some embodiments, if the terminal device has no TA compensation during sending of the first message (Msg1) in the four-step random access, the TA compensation value is 0; if the terminal device has TA compensation during sending of the first message (Msg1) in the four-step random access, the TA compensation value is the signal transmission RTT estimate value between the terminal device and the network device.

That is, in the embodiments of the present disclosure, after the terminal device receives the RAR, the terminal device can know the second RTT offset value (true TA value) according to the TA adjustment value and the initial TA compensation value. Using the true TA value to accurately control the starting of the timer is suitable and beneficial to the terminal power saving, because it is impossible for the terminal device to receive the Msg4 sent by the network within the TA time, thus avoiding the influence of transmission delay on the random access in the NTN system.

The wireless communication method 400 in the present disclosure will be described in detail below through Embodiment 3.

### Embodiment 3

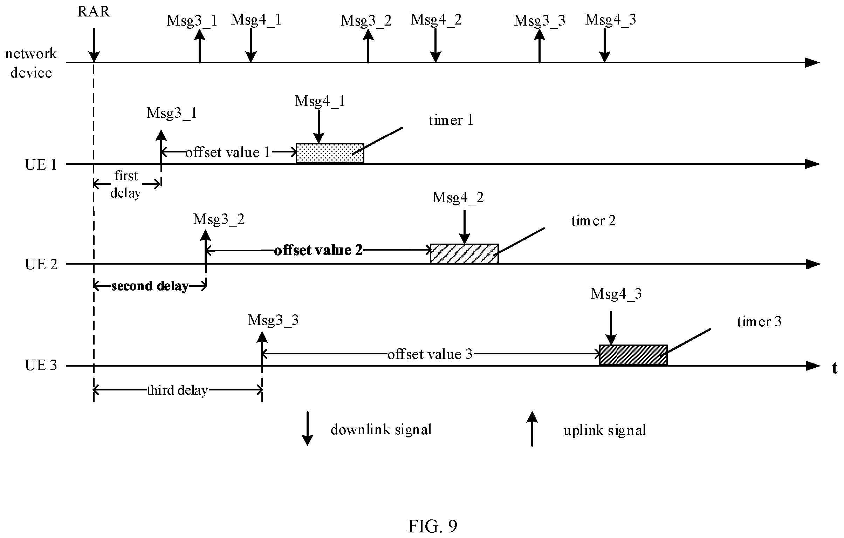

As shown in FIG. 9, for UE1, UE1 may obtain its corresponding second RTT offset value based on the foregoing example a or example b, or UE1 may determine its corresponding second RTT offset value based on the sum of the initial TA compensation value and the TA adjustment value, and the second RTT offset value is denoted as offset value 1. For UE2, UE2 can obtain its corresponding second RTT offset value based on the above example a or example b, or UE2 can also determines its corresponding second RTT offset value based on the sum of the initial TA compensation value and the TA adjustment value, and the second RTT offset value is denoted as offset value 2. For UE3, UE3 can obtain its corresponding second RTT offset value based on the above example a or example b, or UE3 can also determine its corresponding second RTT offset value based on the sum of the initial TA compensation value and the TA adjustment value, and the second RTT offset value is denoted as offset value 3.

In addition, in Embodiment 3, as shown in FIG. 9, UE1 sends Msg3_1 after a first delay subsequent to receipt of the RAR, and UE1 starts timer 1 after the offset value 1 subsequent to Msg3_1. UE1 listens to Msg4_1 during running of the timer 1. UE2 sends Msg3_2 after a second delay subsequent to receipt of the RAR, and UE2 starts timer 2 after the offset value 2 subsequent to Msg3_2. UE2 listens to Msg4_2 during running of the timer 2. UE3 sends Msg3_3 after a third delay subsequent to receipt of the RAR, and UE3 starts timer 3 after the offset value 3 subsequent to Msg3_3. UE3 listens to Msg4_3 during running of the timer 3.

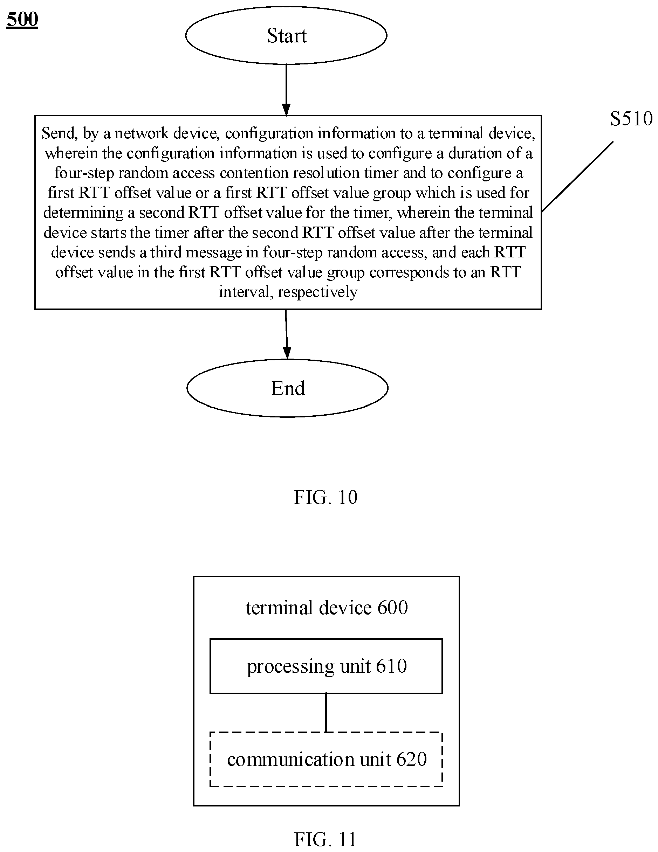

The wireless communication method 400 according to the embodiments of the present disclosure is described in detail from the perspective of the terminal device, and the following will describe the corresponding solutions in detail from the perspective of the network device with reference to FIG. 10. It should be understood that the description regarding the terminal device side corresponds to the description regarding the network device sides, and similar descriptions can be found in the description about the above embodiments, and repeated description will be omitted here.

FIG. 10 is a schematic flowchart of a wireless communication method 500 according to an embodiment of the present disclosure. As shown in FIG. 10, the method 500 may include but is not limited to the following contents:

In S510, a network device sends configuration information to a terminal device. The configuration information is used to configure a duration of a four-step random access contention resolution timer and to configure a first RTT offset value or a first RTT offset value group which is used for determining a second RTT offset value for the timer. The terminal device starts the timer after the second RTT offset value after the terminal device sends a third message in four-step random access, and each RTT offset value in the first RTT offset value group corresponds to an RTT interval, respectively.

It should be noted that the method 500 can be applied to the NTN system, that is, the network device can be a satellite in the NTN. In addition, the method 500 can also be applied to some other communication systems, which is not limited in the present disclosure.

According to some embodiments, the configuration information is carried in broadcast information, or the configuration information is carried in RRC signaling.

According to some embodiments, if the configuration information is carried in RRC signaling, the configuration information is RRC reconfiguration information or RRC release information.

According to some embodiments, the first RTT offset value is determined according to a cell radius and/or a positioning accuracy of the terminal device.

According to some embodiments, the first RTT offset value group is determined according to the positioning accuracy of the terminal device.

According to some embodiments, in the case where the configuration information configures the first RTT offset value, the network device determines the second RTT offset value according to the signal transmission RTT estimate value between the network device and the terminal device and the first RTT offset value.

Specifically, the network device determines a difference between the RTT estimate value and the first RTT offset value as the second RTT offset value.

According to some embodiments, when the configuration information configures the first RTT offset value group, the network device determines a target RTT offset value according to the signal transmission RTT estimate value between the network device and the terminal device. The target RTT offset value is an RTT offset value in the first RTT offset value group corresponding to an RTT interval where the RTT estimate value is located. And, the network device determines the second RTT offset value according to the RTT estimate value and the target RTT offset value.

Specifically, the network device determines a difference between the RTT estimate value and the target RTT offset value as the second RTT offset value.

According to some embodiments, the network device sends the fourth message in the four-step random access during the running of the timer.

In the embodiments of the present disclosure, the first RTT offset value or the first RTT offset value group is introduced to determine the start time of the four-step random access contention resolution timer, so that the starting of the timer can be accurately controlled, and the influence of transmission delay on random access in NTN system can be avoided.

The method embodiments of the present disclosure are described in detail above with reference to FIGS. 3 to 10. The device embodiments of the present disclosure will be described in detail below with reference to FIGS. 11 to 17. It should be understood that the device embodiments and the method embodiments correspond to each other, and for similar descriptions, reference can be made the above descriptions regarding the method embodiments.

FIG. 11 is a schematic block diagram of a terminal device 600 according to an embodiment of the present disclosure. As shown in FIG. 11, the terminal device 600 may include a processing unit 610.

The processing unit 610 is configured to determine a start time of a time window for random access according to a first RTT offset value, or determine the start time of the time window for random access according to a first RTT offset value group, wherein each RTT offset value in the first RTT offset value group corresponds to an RTT interval, respectively.

According to some embodiments, the time window is a random access response time window in four-step random access, or the time window is a time window for receipt of a second message MsgB in two-step random access.

According to some embodiments, the first RTT offset value is determined according to a cell radius and/or a positioning accuracy of the terminal device.

According to some embodiments, the first RTT offset value group is determined according to a positioning accuracy of the terminal device.

According to some embodiments, the terminal device 600 further includes:
a communication unit 620 configured to receive configuration information sent by a network device, wherein the configuration information is used to configure a window length of the time window and to configure the first RTT offset value or the first RTT offset value group.

According to some embodiments, the configuration information is carried in broadcast information, or the configuration information is carried in RRC signaling.

According to some embodiments, in response to the configuration information being carried in RRC signaling, the configuration information is RRC reconfiguration information or RRC release information.

According to some embodiments, the first RTT offset value or the first RTT offset value group is preconfigured.

According to some embodiments, the processing unit 610 is configured to:
determine a start time offset value of the time window according to a signal transmission RTT estimate value between the terminal device and the network device and the first RTT offset value.

According to some embodiments, the processing unit 610 is configured to:
determine a difference between the RTT estimate value and the first RTT offset value as the start time offset value of the time window.

According to some embodiments, the processing unit 610 is configured to:
determine a target RTT offset value according to a signal transmission RTT estimate value between the terminal device and the network device, wherein the target RTT offset value is an RTT offset value in the first RTT offset value group corresponding to an RTT interval where the RTT estimate value is located; and
determine a start time offset value of the time window according to the RTT estimate value and the target RTT offset value.

According to some embodiments, the processing unit 610 is configured to:
determine a difference between the RTT estimate value and the target RTT offset value as the start time offset value of the time window.

According to some embodiments, in a case where the time window is a random access response time window in a four-step random access, the processing unit 610 is further configured to, after the terminal device sends a first message Msg1 of the four-step random access, start the time window at the first PDCCH resource position after the start time offset value of the time window, and monitor a random access response during the time window.

According to some embodiments, in a case where the time window is a time window for receipt of a second message MsgB in two-step random access, the processing unit 610 is further configured to, after the terminal device sends a first message MsgA of the two-step random access, start the time window at the first PDCCH resource position after the start time offset value of the time window, and monitor the second message MsgB in the two-step random access during the time window.

According to some embodiments, the terminal device 600 is applied to NTN.

Optionally, in some embodiments, the above-mentioned communication unit may be a communication interface or a transceiver, or an input/output interface of a communication chip or a system-on-chip. The aforementioned processing unit may be one or more processors.

It should be understood that the terminal device 600 according to the embodiments of the present disclosure may correspond to the terminal device in the method embodiments of the present disclosure, and the above-mentioned and other operations and/or functions of each unit in the terminal device 600 are respectively used for realizing the corresponding processes performed by the terminal device in the method 200 shown in FIG. 3, and repeated descriptions are omitted here for brevity.

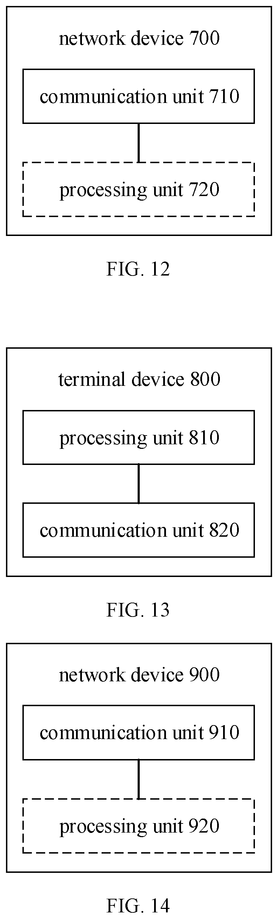

FIG. 12 is a schematic block diagram of a network device 700 according to an embodiment of the present disclosure. As shown in FIG. 12, the network device 700 includes a communication 710.

The communication unit 710 is configured to send configuration information to a terminal device, wherein the configuration information is used to configure a window length of a time window for random access and to configure a first RTT offset value or a first RTT offset value group which is used for determining a start time of the time window, and each RTT offset value in the first RTT offset value group corresponds to an RTT interval, respectively.

According to some embodiments, the time window is a random access response time window in four-step random access, or the time window is a time window for receipt of a second message MsgB in two-step random access.

According to some embodiments, the first RTT offset value is determined according to a cell radius and/or a positioning accuracy of the terminal device.

According to some embodiments, the first RTT offset value group is determined according to a positioning accuracy of the terminal device.

According to some embodiments, the network device 700 further includes a processing unit 720.

The processing unit 720 is configured to, in a case where the configuration information configures the first RTT offset value, determine a start time offset value of the time window according to a signal transmission RTT estimate value between the network device and the terminal device and the first RTT offset value.

According to some embodiments, the processing unit 720 is configured to:
determine a difference between the RTT estimate value and the first RTT offset value as the start time offset value of the time window.

According to some embodiments, the network device 700 further includes a processing unit 720.

The processing unit 720 is configured to, in a case where the configuration information configures the first RTT offset value group, determine a target RTT offset value according to a signal transmission RTT estimate value between the network device and the terminal device, wherein the target RTT offset value is an RTT offset value in the first RTT offset value group corresponding to an RTT interval where the RTT estimate value is located;
the processing unit 720 is further configured to determine a start time offset value of the time window according to the RTT estimate value and the target RTT offset value.

According to some embodiments, the processing unit 720 is further configured to:
determine a difference between the RTT estimate value and the target RTT offset value as the start time offset value of the time window.

According to some embodiments, in a case where the time window is a random access response time window in a four-step random access, the communication unit 710 is further configured to send a random access response during the time window.

According to some embodiments, in a case where the time window is a time window for receipt of a second message MsgB in two-step random access, the communication unit 710 is further configured to send the second message MsgB in the two-step random access during the time window.

According to some embodiments, the configuration information is carried in broadcast information, or the configuration information is carried in RRC signaling.

According to some embodiments, in response to the configuration information being carried in RRC signaling, the configuration information is RRC reconfiguration information or RRC release information.

According to some embodiments, the network device 700 is applied to NTN.

Optionally, in some embodiments, the above-mentioned communication unit may be a communication interface or a transceiver, or an input/output interface of a communication chip or a system-on-chip. The aforementioned processing unit may be one or more processors.

It should be understood that the network device 700 according to the embodiments of the present disclosure may correspond to the network device in the method embodiments of the present disclosure, and the above-mentioned and other operations and/or functions of each unit in the network device 700 are respectively used for realizing the corresponding processes performed by the network device in the method 300 shown in FIG. 7, and repeated descriptions are omitted here for brevity.

FIG. 13 is a schematic block diagram of a terminal device 800 according to an embodiment of the present disclosure. As shown in FIG. 13, the terminal device 800 includes a processing unit 810 and a communication unit 820.

The processing unit 810 is configured to determine a second Round Trip Time (RTT) offset value for a four-step random access contention resolution timer.

The processing unit 810 is further configured to start the timer after the second RTT offset value after the communication unit 820 sends a third message in four-step random access, and control the communication unit 820 to monitor a fourth message in the four-step random access during running of the timer, wherein a running duration of the timer is configured by a network device.

According to some embodiments, the processing unit 810 is configured to:
determine the second RTT offset value according to a first RTT offset value, or determine the second RTT offset value according to a first RTT offset value group, wherein each RTT offset value in the first RTT offset value group corresponds to an RTT interval, respectively.

According to some embodiments, the communication unit 820 is further configured to:
receive configuration information sent by the network device, wherein the configuration information is used to configure the duration of the timer and to configure the first RTT offset value or the first RTT offset value group.

According to some embodiments, the configuration information is carried in broadcast information, or the configuration information is carried in RRC signaling.

According to some embodiments, in response to the configuration information being carried in RRC signaling, the configuration information is RRC reconfiguration information or RRC release information.

According to some embodiments, the first RTT offset value or the first RTT offset value group is preconfigured.

According to some embodiments, the first RTT offset value is determined a cell radius and/or a positioning accuracy of the terminal device.

According to some embodiments, the first RTT offset value group is determined according to a positioning accuracy of the terminal device.

According to some embodiments, the processing unit 810 is configured to:

In a case where the configuration information configures the first RTT offset value, determine the second RTT offset value according to a signal transmission RTT estimate value between the terminal device and the network device and the first RTT offset value.

According to some embodiments, the processing unit 810 is configured to:
determine a difference between the RTT estimate value and the first RTT offset value as the second RTT offset value.

According to some embodiments, the processing unit 810 is configured to:
in a case where the configuration configures the first RTT offset value group, determine a target RTT offset value according to a signal transmission RTT estimate value between the terminal device and the network device, wherein the target RTT offset value is an RTT offset value in the first RTT offset value group corresponding to an RTT interval where the RTT estimate value is located; and
determine the second RTT offset value according to the RTT estimate value and the target RTT offset value.

According to some embodiments, the processing unit 810 is configured to:
determine a difference between the RTT estimate value and the target RTT offset value as the second RTT offset value.

According to some embodiments, the processing unit 810 is configured to:
determine a sum of an initial Timing Advance (TA) compensation value and a TA adjustment value as the second RTT offset value, wherein the initial TA compensation value is a TA compensation value used by the terminal device in sending of a first message in the four-step random access, and the TA adjustment value is an adjustment value for TA which is configured by the network device in a second message in the four-step random access.

According to some embodiments, in response to that the terminal device has no TA compensation during sending of the first message in the four-step random access, the TA compensation value is 0; and
in response to that the terminal device has TA compensation during sending of the first message in the four-step random access, the TA compensation value is the signal transmission RTT estimate value between the terminal device and the network device.

According to some embodiments, the terminal device 800 is applied to NTN.

Optionally, in some embodiments, the above-mentioned communication unit may be a communication interface or a transceiver, or an input/output interface of a communication chip or a system-on-chip. The aforementioned processing unit may be one or more processors.

It should be understood that the terminal device 800 according to the embodiments of the present disclosure may correspond to the terminal device in the method embodiments of the present disclosure, and the above-mentioned and other operations and/or functions of each unit in the terminal device 800 are respectively used for realizing the corresponding processes performed by the terminal device in the method 400 shown in FIG. 8, and repeated descriptions are omitted here for brevity.

FIG. 14 is a schematic block diagram of a network device 900 according to an embodiment of the present disclosure. As shown in FIG. 14, the network device 900 includes a communication unit 910.

The communication unit 910 is configured to send configuration information to a terminal device, wherein the configuration information is used to configure a duration of a four-step random access contention resolution timer and to configure a first RTT offset value or a first RTT offset value group which is used for determining a second RTT offset value for the timer, wherein the terminal device starts the timer after the second RTT offset value after the terminal device sends a third message in four-step random access, and each RTT offset value in the first RTT offset value group corresponds to an RTT interval, respectively.

According to some embodiments, the first RTT offset value is determined a cell radius and/or a positioning accuracy of the terminal device.

According to some embodiments, the first RTT offset value group is determined according to a positioning accuracy of the terminal device.

According to some embodiments, the network device 900 further includes a processing unit 920.

The processing unit 920 is configured to, in a case where the configuration information configures the first RTT offset value, determine the second RTT offset value according to a signal transmission RTT estimate value between the network device and the terminal device and the first RTT offset value.

According to some embodiments, the processing unit 920 is configured to:
determine a difference between the RTT estimate value and the first RTT offset value as the second RTT offset value.

According to some embodiments, the network device 900 further includes a processing unit 920.

The processing unit 920 is configured to, in a case where the configuration information configures the first RTT offset value group, determine a target RTT offset value according to a signal transmission RTT estimate value between the network device and the terminal device, wherein the target RTT offset value is an RTT offset value in the first RTT offset value group corresponding to an RTT interval where the RTT estimate value is located;
the processing unit 920 is further configured to determine the second RTT offset value according to the RTT estimate value and the target RTT offset value.

According to some embodiments, the processing unit 920 is configured to:
determine a difference between the RTT estimate value and the target RTT offset value as the second RTT offset value.

According to some embodiments, the communication unit 920 is further configured to:
send a fourth message in the four-step random access during running of the timer.

According to some embodiments, the configuration information is carried in broadcast information, or the configuration information is carried in RRC signaling.

According to some embodiments, in response to the configuration information being carried in RRC signaling, the configuration information is RRC reconfiguration information or RRC release information.

According to some embodiments, the network device 900 is applied to NTN.

Optionally, in some embodiments, the above-mentioned communication unit may be a communication interface or a transceiver, or an input/output interface of a communication chip or a system-on-chip. The aforementioned processing unit may be one or more processors.

It should be understood that the network device 900 according to the embodiments of the present disclosure may correspond to the network device in the method embodiments of the present disclosure, and the above-mentioned and other operations and/or functions of each unit in the network device 900 are respectively used for realizing the corresponding processes performed by the network device in the method 500 shown in FIG. 10, and repeated descriptions are omitted here for brevity.

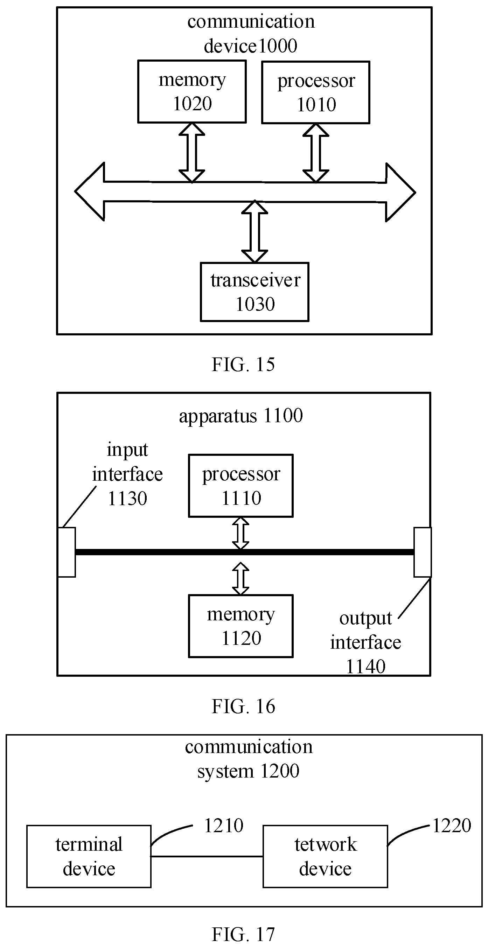

FIG. 15 is a schematic structural diagram of a communication device 1000 according to an embodiment of the present disclosure. The communication device 1000 shown in FIG. 15 includes a processor 1010, and the processor 1010 may call and run a computer program from a memory to perform the method in embodiments of the present disclosure.

According to embodiments, as shown in FIG. 15, the communication device 1000 may further include a memory 1020. The processor 1010 may call and run a computer program from the memory 1020 to perform the method in embodiments of the present disclosure.

The memory 1020 may be a separate device independent of the processor 1010, or may be integrated in the processor 1010.

According to embodiments, as shown in FIG. 15, the communication device 1000 may further include a transceiver 1030, and the processor 1010 may control the transceiver 1030 to communicate with other devices. Specifically, the transceiver may send information or data to other devices, or receive information or data sent by other devices.

The transceiver 1030 may include a transmitter and a receiver. The transceiver 1030 may further include one or more antennas.

According to embodiments, the communication device 1000 may specifically be the network device according to embodiments of the present disclosure, and the communication device 1000 may implement the corresponding processes implemented by the network device in the method embodiments of the present disclosure.

According to embodiments, the communication device 1000 may specifically be the mobile terminal/terminal device according to embodiments of the present disclosure, and the communication device 1000 may implement the corresponding processes implemented by the mobile terminal/terminal device in the method embodiments of the present disclosure.

FIG. 16 is a schematic structural diagram of a device according to an embodiment of the present disclosure. The device 1100 shown in FIG. 16 includes a processor 1110, and the processor 1110 can call and run a computer program from a memory to implement the method according to embodiments of the present disclosure.

According to embodiments, as shown in FIG. 16, the device 1100 may further include a memory 1120. The processor 1110 may call and run a computer program from the memory 1120 to implement the method according to embodiments of the present disclosure.

The memory 1120 may be a separate device independent of the processor 1110, or may be integrated in the processor 1110.

According to embodiments, the device 1100 may further include an input interface 1130. The processor 1110 may control the input interface 1130 to communicate with other devices or chips, and specifically, the processor 1110 can control the input interface to obtain information or data sent by other devices or chips.

According to embodiments, the device 1100 may further include an output interface 1140. The processor 1110 can control the output interface 1140 to communicate with other devices or chips, and specifically, the processor 1110 can control the output interface 1140 to output information or data to other devices or chips.

According to embodiments, the device can be applied to the network device in embodiments of the present disclosure, and the device can implement the corresponding processes implemented by the network device in various methods according to embodiments of the present disclosure. For brevity, details are not repeated herein again.

According to embodiments, the device can be applied to the mobile terminal/terminal device in embodiments of the present disclosure, and the device can implement the corresponding processes implemented by the mobile terminal/terminal device in various methods according to embodiments of the present disclosure. For brevity, details are not repeated herein again.

Optionally, the device in the above embodiments may be a chip. For example, the chip may be a system-level chip, a system chip, a chip system, or a system-on-chip, etc.

FIG. 17 is a schematic block diagram of a communication system 1200 according to an embodiment of the present disclosure. As shown in FIG. 17, the communication system 1200 includes a terminal device 1210 and a network device 1220.

The terminal device 1210 can be used to implement the corresponding functions implemented by the terminal device in the above method embodiments, and the network device 1220 can be used to implement the corresponding functions implemented by the network device in the above method embodiments. For brevity, details are not repeated here.

It should be understood that the processor in embodiments of the present disclosure may be an integrated circuit chip with signal processing capability. In implementations, the steps of the foregoing method embodiments can be completed by hardware integrated logic circuits in the processor or instructions in the form of software. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. The methods, steps, and logical block diagrams disclosed in the embodiments of the present disclosure can be implemented or executed. The general-purpose processor may be a microprocessor or the processor may also be any conventional processor or the like. The steps of the methods disclosed in the embodiments of the present disclosure may be directly embodied as being executed and completed by a hardware decoding processor, or executed by a combination of hardware and software modules in the decoding processor. The software module can be located in a storage medium in the field, such as random access memory, flash memory, read-only memory, programmable read-only memory, or electrically erasable programmable memory, register. The storage medium is located in the memory, and the processor reads the information in the memory to perform the steps of the above methods in combination with hardware.

It can be understood that the memory in the embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM), which is used as an external cache. By way of exemplary rather than limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), or Direct Rambus RAM (DR RAM). It should be noted that the memory in the systems and methods described in the present disclosure is intended to include but not limited to these and any other suitable types of memory.

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

An embodiment of the present disclosure also provides a computer-readable storage medium for storing computer programs.

According to embodiments, the computer-readable storage medium may be applied to the network device in embodiments of the present disclosure, and the computer programs cause a computer to perform the corresponding processes implemented by the network device in each method embodiment of the present disclosure. For brevity, repeated descriptions are omitted here.

According to embodiments, the computer-readable storage medium may be applied to the mobile terminal/terminal device in embodiments of the present disclosure, and the computer programs cause a computer to perform the corresponding processes implemented by the mobile terminal/terminal device in each method embodiment of the present disclosure. For brevity, repeated descriptions are omitted here.

An embodiment of the present disclosure provides a computer program product, including computer program instructions.

According to embodiments, the computer program product may be applied to the network device in embodiments of the present disclosure, and the computer program instructions cause a computer to perform the corresponding processes implemented by the network device in each method embodiment of the present disclosure. For brevity, repeated descriptions are omitted here.

According to embodiments, the computer program product may be applied to the mobile terminal/terminal device in embodiments of the present disclosure, and the computer program instructions cause a computer to perform the corresponding processes implemented by the mobile terminal/terminal device in each method embodiment of the present disclosure. For brevity, repeated descriptions are omitted here.

An embodiment of the present disclosure also provides a computer program.

According to embodiments, the computer program may be applied to the network device in embodiments of the present disclosure, and when the computer program runs on a computer, the computer is caused to perform the corresponding processes implemented by the network device in each method embodiment of the present disclosure. For brevity, repeated descriptions are omitted here.

According to embodiments, the computer program may be applied to the mobile terminal/terminal device in embodiments of the present disclosure, and when the computer program runs on a computer, the computer is caused to perform the corresponding processes implemented by the mobile terminal/terminal device in each method embodiment of the present disclosure. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

## Claims

1. A wireless communication method, comprising:
receiving, by a terminal device, configuration information sent by a network device, wherein the configuration information is used to configure a window length of a time window for random access and to configure a first Round Trip Time, RTT, offset value, wherein the configuration information is carried in broadcast information, or the configuration information is carried in Radio Resource Control, RRC, signaling; and
determining (S210), by the terminal device, a start time of the time window according to the first RTT offset value;
wherein determining, by the terminal device, the start time of the time window according to the first RTT offset value comprises:
determining, by the terminal device, a start time offset value of the time window according to a signal transmission RTT estimate value between the terminal device and the network device and the first RTT offset value;
wherein determining, by the terminal device, the start time offset value of the time window according to the signal transmission RTT estimate value between the terminal device and the network device and the first RTT offset value comprises:
determining, by the terminal device, a difference between the RTT estimate value and the first RTT offset value as the start time offset value of the time window;
wherein the time window is a random access response time window in a four-step random access;
wherein the method further comprises:
after the terminal device sends a first message Msg1 of the four-step random access, starting, by the terminal device, the time window at the first physical downlink control channel, PDCCH, resource position after the start time offset value of the time window, and monitoring a random access response during the time window.

2. The method according to claim 1, wherein the method is applied to a Non-Terrestrial communication Network, NTN.

3. The method according to claim 1 or 2, wherein the first RTT offset value is determined according to a cell radius and/or a positioning accuracy of the terminal device.

4. A wireless communication method, comprising:
sending (S310), by a network device, configuration information to a terminal device, wherein the configuration information is used to configure a window length of a time window for random access and to configure a first Round Trip Time, RTT, offset value, wherein the configuration information is carried in broadcast information, or the configuration information is carried in Radio Resource Control, RRC, signaling; and
determining, by the network device, a start time offset value of the time window according to a signal transmission RTT estimate value between the network device and the terminal device determined by the terminal device and the first RTT offset value;
wherein determining, by the network device, the start time offset value of the time window according to the signal transmission RTT estimate value and the first RTT offset value, comprises:
determining, by the network device, a difference between the RTT estimate value and the first RTT offset value as the start time offset value of the time window;
wherein the time window is a random access response time window in a four-step random access;
wherein the method further comprises:
sending, by the network device, a random access response during the time window, so that the terminal device starts the time window at the first physical downlink control channel, PDCCH, resource position after the start time offset value of the time window and monitors a random access response during the time window.

5. The method according to claim 4, wherein the method is applied to a Non-Terrestrial communication Network, NTN.

6. The method according to claim 4 or 5, wherein the first RTT offset value is determined according to a cell radius and/or a positioning accuracy of the terminal device.

7. A terminal device, configured to perform the method according to any one of claims 1 to 3.

8. A network device, configured to perform the method according to any one of claims 4 to 6.

## Patentansprüche

1. Drahtloskommunikationsverfahren, umfassend:
Empfangen, durch eine Endgerätevorrichtung, von Konfigurationsinformationen, die von einer Netzvorrichtung gesendet wurden, wobei die Konfigurationsinformationen verwendet werden zum Konfigurieren einer Fensterlänge eines Zeitfensters für Erstzugriff und zum Konfigurieren eines ersten Umlaufzeit-Versatzwerts bzw. Round Trip Time-Versatzwerts, RTT-Versatzwerts, wobei die Konfigurationsinformationen in Rundsendeinformationen geführt werden oder die Konfigurationsinformationen in Funkressourcensteuerung-Signalisierung bzw. Radio Resource Control-Signalisierung, RRC-Signalisierung, geführt werden, und
Bestimmen (S210), durch die Endgerätevorrichtung, einer Startzeit des Zeitfensters gemäß dem ersten RTT-Versatzwert;
wobei Bestimmen, durch die Endgerätevorrichtung, der Startzeit des Zeitfensters gemäß dem ersten RTT-Versatzwert Folgendes umfasst:
Bestimmen, durch die Endgerätevorrichtung, eines Startzeitversatzwerts des Zeitfensters gemäß einem Signalübertragung-RTT-Schätzwert zwischen der Endgerätevorrichtung und der Netzvorrichtung und dem ersten RTT-Versatzwert;
wobei Bestimmen, durch die Endgerätevorrichtung, des Startzeitversatzwerts des Zeitfensters gemäß dem Signalübertragung-RTT-Schätzwert zwischen der Endgerätevorrichtung und der Netzvorrichtung und dem ersten RTT-Versatzwert Folgendes umfasst:
Bestimmen, durch die Endgerätevorrichtung, einer Differenz zwischen dem RTT-Schätzwert und dem ersten RTT-Versatzwert als den Startzeitversatzwert des Zeitfensters;
wobei das Zeitfenster ein Erstzugriff-Antwortzeitfenster in einem Vierschritterstzugriff ist;
wobei das Verfahren ferner umfasst:
nachdem die Endgerätevorrichtung eine erste Nachricht Msg1 des Vierschritterstzugriffs gesendet hat, Starten, durch die Endgerätevorrichtung, des Zeitfensters an der ersten Physischer-Downlink-Steuerkanal-Ressourcenposition bzw. Physical Downlink Control Channel-, PDCCH-, Ressourcenposition nach dem Startzeitversatzwert des Zeitfensters, und Überwachen einer Erstzugriffsantwort während des Zeitfensters.

2. Verfahren nach Anspruch 1, wobei das Verfahren auf ein Non-Terrestrisches-Kommunikationsnetz, NTN angewandt wird.

3. Verfahren nach Anspruch 1 oder 2, wobei der erste RTT-Versatzwert gemäß einem Zellenradius und/oder einer Positionierungsgenauigkeit der Endgerätevorrichtung bestimmt wird.

4. Drahtloskommunikationsverfahren, umfassend:
Senden (S310), durch eine Netzvorrichtung, von Konfigurationsinformationen an eine Endgerätevorrichtung, wobei die Konfigurationsinformationen verwendet werden zum Konfigurieren einer Fensterlänge eines Zeitfensters für Erstzugriff und zum Konfigurieren eines ersten Umlaufzeit-Versatzwerts bzw. Round Trip Time-Versatzwerts, RTT-Versatzwerts, wobei die Konfigurationsinformationen in Rundsendeinformationen geführt werden oder die Konfigurationsinformationen in Funkressourcensteuerung-Signalisierung bzw. Radio Resource Control-Signalisierung, RRC-Signalisierung, geführt werden, und
Bestimmen, durch die Netzvorrichtung, eines Startzeitversatzwerts des Zeitfensters gemäß einem Signalübertragung-RTT-Schätzwert zwischen der Netzvorrichtung und der Endgerätevorrichtung, bestimmt durch die Endgerätevorrichtung, und dem ersten RTT-Versatzwert;
wobei Bestimmen, durch die Netzvorrichtung, des Startzeitversatzwerts des Zeitfensters gemäß dem Signalübertragung-RTT-Schätzwert und dem ersten RTT-Versatzwert Folgendes umfasst:
Bestimmen, durch die Netzvorrichtung, einer Differenz zwischen dem RTT-Schätzwert und dem ersten RTT-Versatzwert als den Startzeitversatzwert des Zeitfensters;
wobei das Zeitfenster ein Erstzugriff-Antwortzeitfenster in einem Vierschritterstzugriff ist;
wobei das Verfahren ferner umfasst:
Senden, durch die Netzvorrichtung, einer Erstzugriffsantwort während des Zeitfensters, so dass die Endgerätevorrichtung das Zeitfenster an der ersten Physischer-Downlink-Steuerkanal-Ressourcenposition bzw. Physical Downlink Control Channel-, PDCCH-, Ressourcenposition nach dem Startzeitversatzwert des Zeitfensters sendet und eine Erstzugriffsantwort während des Zeitfensters überwacht.

5. Verfahren nach Anspruch 4, wobei das Verfahren auf ein Non-Terrestrisches-Kommunikationsnetz, NTN angewandt wird.

6. Verfahren nach Anspruch 4 oder 5, wobei der erste RTT-Versatzwert gemäß einem Zellenradius und/oder einer Positionierungsgenauigkeit der Endgerätevorrichtung bestimmt wird.

7. Endgerätevorrichtung, ausgelegt zum Durchführen des Verfahrens nach einem der Ansprüche 1 bis 3.

8. Netzvorrichtung, ausgelegt zum Durchführen des Verfahrens nach einem der Ansprüche 4 bis 6.

## Revendications

1. Procédé de communication sans fil, comprenant :
la réception, par un dispositif terminal, d'informations de configuration envoyées par une dispositif de réseau, les informations de configuration étant utilisées pour configurer une longueur de fenêtre d'une fenêtre temporelle pour un accès aléatoire et pour configurer une première valeur de décalage du temps aller-retour, RTT, les informations de configuration étant transportées dans des informations de diffusion, ou bien les informations de configuration étant transportées dans une signalisation de commandes des ressources radio, RRC ; et
la détermination (S210), par le dispositif terminal, d'une heure de démarrage de la fenêtre temporelle à partir de la première valeur de décalage de RTT ;
la détermination, par le dispositif terminal, de l'heure de démarrage de la fenêtre temporelle à partir de la première valeur de décalage de RTT, comprenant :
la détermination, par le dispositif terminal, d'une valeur de décalage de l'heure de démarrage de la fenêtre temporelle à partir d'une valeur estimée de RTT de transmission du signal entre le dispositif terminal et le dispositif de réseau et de la première valeur de décalage de RTT ;
la détermination, par le dispositif terminal, de la valeur de décalage de l'heure de démarrage de la fenêtre temporelle à partir de la valeur estimée de RTT de transmission du signal entre le dispositif terminal et le dispositif de réseau et de la première valeur de décalage de RTT, comprenant :
la détermination, par le dispositif terminal, d'une différence entre la valeur estimée de RTT et la première valeur de décalage de RTT en tant que valeur de décalage de l'heure de démarrage de la fenêtre temporelle ;
la fenêtre temporelle étant une fenêtre temporelle de réponse à un accès aléatoire dans un accès aléatoire à quatre étapes ;
le procédé comprenant en outre :
après que le dispositif terminal a envoyé une premier message Msg1 de l'accès aléatoire à quatre étapes, le démarrage, par le dispositif terminal, de la fenêtre temporelle à la première position de ressource du canal physique de commande de liaison descendante, PDCCH, après la valeur de décalage de l'heure de démarrage de la fenêtre temporelle, et la surveillance d'une réponse à un accès aléatoire pendant la fenêtre temporelle.

2. Procédé selon la revendication 1, dans lequel le procédé est appliqué à un réseau de communication non terrestre, NTN.

3. Procédé selon la revendication 1 ou 2, dans lequel la première valeur de décalage RTT est déterminée à partir d'un rayon de la cellule et/ou d'une précision de positionnement du dispositif terminal.

4. Procédé de communication sans fil, comprenant :
l'envoi (S310), par un dispositif de réseau, d'informations de configuration à un dispositif terminal, les informations de configuration étant utilisées pour configurer une longueur de fenêtre d'une fenêtre temporelle pour un accès aléatoire et pour configurer une première valeur de décalage du temps aller-retour, RTT, les informations de configuration étant transportées dans des informations de diffusion, ou bien les informations de configuration étant transportées dans une signalisation de commandes des ressources radio, RRC ; et
la détermination, par le dispositif de réseau, d'une valeur de décalage de l'heure de démarrage de la fenêtre temporelle à partir d'une valeur estimée de RTT de transmission du signal entre le dispositif de réseau et le dispositif terminal, déterminée par le dispositif terminal, et de la première valeur de décalage de RTT ; la détermination, par le dispositif de réseau, de la valeur de décalage de l'heure de démarrage de la fenêtre temporelle à partir de la valeur estimée de RTT de transmission du signal et de la première valeur de décalage de RTT, comprenant :
la détermination, par le dispositif de réseau, d'une différence entre la valeur estimée de RTT et la première valeur de décalage de RTT en tant que valeur de décalage de l'heure de démarrage de la fenêtre temporelle ;
la fenêtre temporelle étant une fenêtre temporelle de réponse à un accès aléatoire dans un accès aléatoire à quatre étapes ;
le procédé comprenant en outre :
l'envoi, par le dispositif de réseau, d'une réponse d'accès aléatoire pendant la fenêtre temporelle, de telle sorte que le dispositif terminal démarre la fenêtre temporelle à la première position de ressource du canal physique de commande de liaison descendante, PDCCH, après la valeur de décalage de l'heure de démarrage de la fenêtre temporelle, et surveille une réponse d'accès aléatoire pendant la fenêtre temporelle.

5. Procédé selon la revendication 4, dans lequel le procédé est appliqué à un réseau de communication non terrestre, NTN.

6. Procédé selon la revendication 4 ou 5, dans lequel la première valeur de décalage RTT est déterminée à partir d'un rayon de la cellule et/ou une précision de positionnement du dispositif terminal.

7. Dispositif terminal, configuré pour exécuter le procédé selon l'une quelconque des revendications 1 à 3.

8. Dispositif de réseau, configuré pour exécuter le procédé selon l'une quelconque des revendications 4 à 6.
